# EUROPÄISCHE PATENTANMELDUNG

(11) **EP 2 927 653 A1**
(43) Veröffentlichungstag der Anmeldung: **07.10.2015**
(21) Anmeldenummer: 14163279.4
(22) Anmeldetag: 02.04.2014
(51) Int. Cl.: G01L 5/10, G01L 5/00, H02G 1/08

(54) **Kabelzugkraftmessvorrichtung sowie Verfahren und Vorrichtung zum Einziehen eines Kabels**

(71) Anmelder: Singerer Müller, Maria, 8259 Kaltenbach (CH)
(72) Erfinder: Müller, Robert, 8259 Kaltenbach (CH); Hartwig, Jürgen, 5463 Wislikofen (CH)
(74) Vertreter: Graf, Werner

(57) **Zusammenfassung**

Die Kabelzugkraftmessvorrichtung (2) weist eine in Richtung einer Längsachse (L) verlaufende Aussenoberfläche (2a) auf, und umfasst ein Stirnteil (3), einen Kraftsensor (6) sowie ein Zugteil (4), wobei das Stirnteil (3), der Kraftsensor (6) und das Zugteil (4) in Verlaufsrichtung der Längsachse (L) nacheinander folgend angeordnet sind, wobei das Stirnteil (3) über den Kraftsensor (6) mit dem Zugteil (4) verbunden ist, um mit dem Kraftsensor (6) die zwischen dem Stirnteil (3) und dem Zugteil (4) anliegende Kraft zu messen, und umfasst eine Datenspeichervorrichtung (7) welche im Stirnteil (3) oder im Zugteil (4) angeordnet ist, und welche mit dem Kraftsensor (6) Signal leitend verbunden ist, um die Zugkraft (Z) mehrmals zeitlich nacheinander zu messen und die gemessenen Zugkraftwerte (Z1, Z2, ... Zn) in der Datenspeichervorrichtung (7) abzuspeichern, wobei das Stirnteil (3) ein Befestigungsteil (3b) für ein Zugseil (11) aufweist und wobei das Zugteil (4) ein Befestigungsteil (4c) für ein Kabel (10) aufweist, wobei das Stirnteil (3) und das Zugteil (4) je eine Aussenhülle (3e,4e) aufweisen, wobei die Aussenhüllen (3e,4e) derart ausgestaltet sind, dass zumindest eine der Aussenhüllen (3e,4e) den Kraftsensor (6) gegen Aussen umhüllt, wobei die Aussenhüllen (3e,4e) gemeinsam die in Richtung der Längsachse (L) verlaufende Aussenoberfläche (2a) ausbilden.

## Beschreibung

Die Erfindung betrifft eine Kabelzugkraftmessvorrichtung. Die Erfindung betrifft weiter ein Verfahren sowie eine Vorrichtung zum Einziehen eines Kabels.

### Stand der Technik

Das Einziehen eines Kabels in einen Kanal, einen Graben oder einen Schacht unter zur Hilfenahme einer Kabelzugmaschine wird als Kabelzug bezeichnet. Dabei wird vorerst ein Zugseil ausgelegt, das an dessen Stirnseite mit dem einzuziehenden Kabel verbunden werden kann. Das Zugseil ist zudem mit der Kabelzugmaschine verbunden. Um das Kabel in den Kanal, Graben oder Schacht einzuziehen wird die Kabelzugmaschine betätigt, welche eine Zugkraft auf das Zugseil ausübt, sodass das Zugseil und das mit dem Zugseil verbundene Kabel eingezogen wird. Diese bekannte Vorrichtung beziehungsweise dieses bekannte Verfahren weist den Nachteil auf, dass die effektiv am Kabel angreifende Zugkraft, insbesondere die maximal einwirkende Zugkraft, nicht oder nur sehr ungenau bestimmbar ist. Die Kenntnis der maximal auf das Kabel einwirkenden Zugkraft ist insbesondere beim Verlegen von Kommunikationskabeln wie beispielsweise Lichtwellenleitern von entscheidender Bedeutung, um sicherzustellen, dass das Kabel während dem Einzug nicht übermässigen Zugkräften ausgesetzt war. Übermässige Zugkräfte haben zu Folge, dass Leiter im Innern des Kommunikationskabels beschädigt oder zerstört sein könnten, sodass das eigezogene Kommunikationskabel teileweise oder vollständig funktionsunfähig ist.

### Darstellung der Erfindung

Aufgabe der Erfindung ist es eine Vorrichtung sowie ein Verfahren zu bilden, welche ein zuverlässiges und sicheres Einziehen eines Kabels zum Beispiel in einen Kanal, einen Graben oder einen Schacht ermöglichen.

Diese Aufgabe wird gelöst mit einer Kabelzugkraftmessvorrichtung aufweisend die Merkmale von Anspruch 1. Die Unteransprüche 2 bis 4 betreffen weitere, vorteilhafte Ausgestaltungen. Die Aufgabe wird weiter gelöst mit einem Verfahren zum Einziehen eines Kabels aufweisend die Merkmale von Anspruch 5. Die Unteransprüche 6 bis 11 betreffen weitere vorteilhafte Verfahrensschritte. Die Aufgabe wird weiter gelöst mit einer Vorrichtung zum Einziehen aufweisend die Merkmale von Anspruch 12. Die Unteransprüche 13 und 14 betreffen weitere vorteilhafte Vorrichtungen.

Die Aufgabe wird insbesondere gelöst mit einer Kabelzugkraftmessvorrichtung aufweisend eine in Richtung einer Längsachse verlaufende Aussenoberfläche, sowie umfassend ein Stirnteil, einen Kraftsensor sowie ein Zugteil, wobei das Stirnteil, der Kraftsensor und das Zugteil in Verlaufsrichtung der Längsachse nacheinander folgend angeordnet sind, wobei das Stirnteil über den Kraftsensor mit dem Zugteil verbunden ist, um mit dem Kraftsensor die zwischen dem Stirnteil und dem Zugteil anliegende Kraft zu messen, sowie umfassend eine Datenspeichervorrichtung welche im Stirnteil oder im Zugteil angeordnet ist, und welche mit dem Kraftsensor Signal leitend verbunden ist, um die Zugkraft mehrmals zeitlich nacheinander zu messen und die gemessenen Zugkraftwerte in der Datenspeichervorrichtung abzuspeichern, wobei das Stirnteil ein Befestigungsteil für ein Zugseil aufweist und wobei das Zugteil ein Befestigungsteil für ein Kabel aufweist, wobei das Stirnteil und das Zugteil je eine Aussenhülle aufweisen, wobei die Aussenhüllen derart ausgestaltet sind, dass zumindest eine der Aussenhüllen den Kraftsensor gegen Aussen umhüllt, wobei die Aussenhüllen gemeinsam die in Richtung der Längsachse verlaufende Aussenoberfläche ausbilden. Die Kabelzugkraftmessvorrichtung kann auch derart verbunden werden, dass das Stirnteil mit dem Kabel verbunden wird, und dass das Zugteil mit dem Zugseil verbunden wird. Vorteilhafterweise ist es somit für die Funktion der Kabelzugkraftmessvorrichtung nicht von Bedeutung, wie diese zwischen dem Zugseil und dem Kabel angeordnet ist, das heisst es ist nicht von Bedeutung ob das Zugseil mit dem Zugteil oder dem Stirnteil, beziehungsweise ob das Kabel mit dem Stirnteil oder dem Zugteil verbunden ist.

Die Aufgabe wird weiter insbesondere gelöst mit einem Verfahren zum Einziehen eines Kabels in einen Kanal, einen Graben oder einen Schacht, indem ein Zugseil mit einer Kabelzugkraftmessvorrichtung verbunden wird, wobei die Kabelzugkraftmessvorrichtung ein Stirnteil und ein Zugteil aufweist, wobei das Stirnteil mit dem Zugseil verbunden wird, und wobei das Zugteil mit dem einzuziehenden Kabel verbunden wird, und wobei das Zugseil und somit auch die Kabelzugkraftmessvorrichtung und das einzuziehende Kabel durch den Kanal, Graben oder Schacht gezogen werden, wobei während dem Einziehen des Kabels die zwischen dem Stirnteil und dem Zugteil auftretende Zugkraft mit der Kabelzugkraftmessvorrichtung mehrmals zeitlich nacheinander gemessen wird, und wobei die gemessenen Zugkraftwerte in einer Datenspeichervorrichtung der Kabelzugkraftmessvorrichtung gespeichert werden. In der Kabelzugkraftmessvorrichtung ist vorzugsweise ein Energiespeicher angeordnet, vorzugsweise eine Batterie, um die sich innerhalb der Kabelzugkraftmessvorrichtung befindlichen elektronischen Komponenten mit Energie zu versorgen. In einer vorteilhaften Ausgestaltung ist die Kabelzugkraftmessvorrichtung deshalb autonom betreibbar, das heisst, dass kein zusätzliches elektrisches Kabel notwendig ist, um die Kabelzugkraftmessvorrichtung mit einer externen Energiequelle oder einer externen Elektronik zu verbinden, oder um Daten zu übertragen. Es kann sich jedoch als vorteilhaft erweisen Datenübertragungsmittel vorzusehen um zwischen der Kabelzugkraftmessvorrichtung und einer externe Sende-Empfänger-Einheit drahtlos per Funkt Daten zu übertragen, um insbesondere in der Kabelzugkraftmessvorrichtung anfallende Daten drahtlos zu einer externen Überwachungsvorrichtung oder einem externen Datenspeicher zu übertragen.

Die Aufgabe wird weiter insbesondere gelöst mit einer Vorrichtung zum Einziehen eines Kabels umfassend eine Kabelzugkraftmessvorrichtung, umfassend eine Kabelzugmaschine mit einem Zugseil, sowie umfassend eine Auswertevorrichtung, wobei das Kabel über die Kabelzugkraftmessvorrichtung mit dem Zugseil verbindbar ist, wobei die Kabelzugkraftmessvorrichtung und die Auswertevorrichtung derart ausgestaltet sind, dass die in der Datenspeichervorrichtung der Kabelzugkraftmessvorrichtung gespeicherten Zugkraftwerte an die Auswertevorrichtung übertragbar sind, und dass die Auswertevorrichtung derart ausgestaltet ist, dass zumindest der maximal aufgetretene Zugkraftwert bestimmbar ist.

Die erfindungsgemässe Kabelzugkraftmessvorrichtung weist den Vorteil auf, dass diese äusserst robust ist und sehr einfach verwendet werden kann. In einer vorteilhaften Ausgestaltung misst die Kabelzugkraftmessvorrichtung die während dem Einzug des Kabels auf das Kabel bewirkte Zugkräfte in regelmässigen Zeitabständen, z.B. jede Sekunde. Nach erfolgtem Kabeleinzug kann vorzugsweise für jedes Kabel ein individuelles Einzugsprotokoll erstellt werden, indem für jedes Kabel die Zugkräfte in Funktion der Zeit und/oder die maximal aufgetretene Zugkraft protokolliert wird. Da die Daten elektronisch zur Verfügung stehen kann auf einfache Weise für eine Vielzahl von Kabeln je ein individuelles Einzugsprotokoll erstellt werden. In einer vorteilhaften Ausgestaltung wird für jede gemessene Zugkraft zudem der entsprechende Messzeitpunkt abgespeichert. In einer vorteilhaften Ausgestaltung kann die Kabelzugkraftmessvorrichtung auch erst nach dem Einzug mehrerer Kabel, beispielweise einmal täglich ausgelesen werden. Da die Zugkräfte und die Zeit gespeichert sind können die Datensätze auf einfache Weise dem jeweiligen eingezogenen Kabel zugeordnet werden, sofern für die eingezogenen Kabel die jeweilige Zeit des Einzugs erfasst wurde. Die erfindungsgemässe Kabelzugkraftmessvorrichtung ermöglicht somit nacheinander eine Vielzahl von Kabeln einzuziehen und effizient ein individuelles Einzugsprotokoll für jedes eingezogene Kabel zu erstellen.

Die Erfindung wird nachfolgend an Hand von Ausführungsbeispielen beschrieben.

### Kurze Beschreibung der Zeichnungen

Die zur Erläuterung der Ausführungsbeispiele verwendeten Zeichnungen zeigen:
- Fig. 1: schematisch ein Ausführungsbeispiel einer erfindungsgemässen Vorrichtung zum Einziehen eines Kabels;
- Fig. 2: eine perspektivische Ansicht einer Kabelzugkraftmessvorrichtung;
- Fig. 3: einen Längsschnitt durch eine Kabelzugkraftmessvorrichtung.

Grundsätzlich sind in den Zeichnungen gleiche Teile mit gleichen Bezugszeichen versehen.

### Wege zur Ausführung der Erfindung

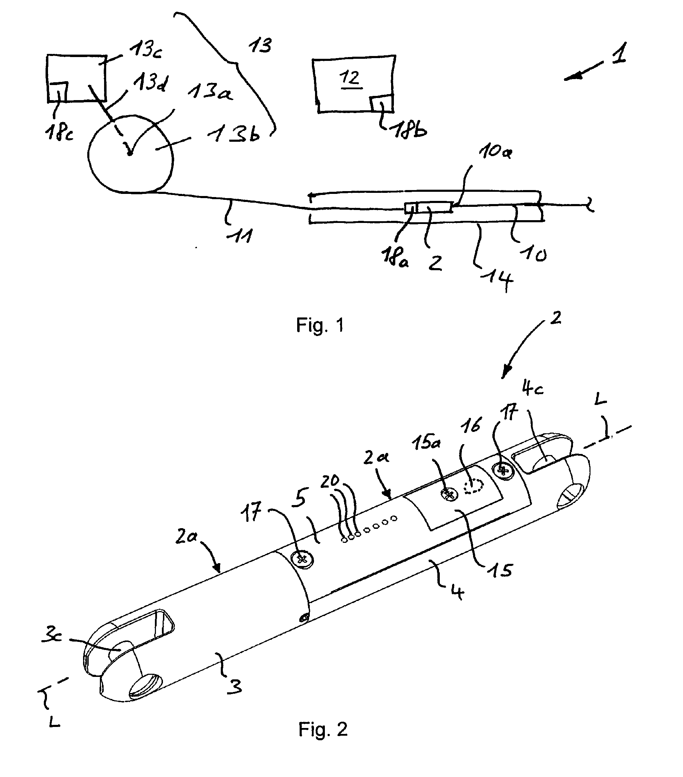

Fig. 1 zeigt eine Vorrichtung 1 zum Einziehen eines Kabels 10 in einen Kabelkanal 14. Die Vorrichtung 1 umfasst eine Kabelzugkraftmessvorrichtung 2 sowie eine Kabelzugmaschine 13 mit einem Zugseil 11. Die Kabelzugmaschine 13 umfasst eine um eine Drehachse 13a drehbar gelagerte Kabelrolle 13b, auf welcher das Zugseil 11 aufgewickelt werden kann. Die Kabelzugmaschine 13 umfasst zudem einen Antrieb 13c, welcher über eine Antriebswelle 13d mit der Kabelrolle 13b verbunden ist, um diese in Drehrichtung anzutreiben. Zum Einziehen des Kabels 10 in den Kabelkanal 14 wird im dargestellten Ausführungsbeispiel zuerst das Zugseil 11 durch den Kabelkanal 14 geleitet, bis das Zugseil 11 rechts aus dem Kabelkanal 14 austritt. Danach wird das Kabel 10 an dessen Kabelanfang 10a mit der Kabelzugkraftmessvorrichtung 2 verbunden, und die Kabelzugkraftmessvorrichtung 2 wird mit dem Zugseil 11 verbunden. Daraufhin wird die Kabelzugkraftmessvorrichtung 2 aktiviert, sodass diese die zwischen dem Zugseil 11 und dem Kabel 10 anliegende Kraft misst. Die Kabelzugmaschine 13 wird nun aktiviert indem das Zugseil 11 auf die Kabelrolle 13b aufgerollt wird, und die Kabelzugkraftmessvorrichtung 2 und somit auch das Kabel 10 durch den Kabelkanal 14 gezogen wird, bis das Kabel 10 aus dem Kabelkanal 14 austritt.

In einer vorteilhaften Ausgestaltung umfasst die Kabelzugkraftmessvorrichtung 2 eine Datenspeichervorrichtung 7, vorzugsweise einen Datenlogger, welche die zwischen dem Zugseil 11 und dem Kabel 10 anliegende Zugkraft Z in vorzugsweise regelmässigen Zeitabständen, zum Beispiel 1 mal pro Sekunde, misst und die gemessenen Zugkraftwerte Z1, Z2, ... Zn in der Datenspeichervorrichtung 7 abspeichert.

Nach dem Einzug des Kabels 10 in den Kabelkanal 14 werden aus den gespeicherten Zugkraftwerten Z1, Z2, ... Zn zumindest der maximal aufgetretene Zugkraftwert Zmax bestimmt. Dieser Zugkraftwert Zmax dient insbesondere als Nachweis, ob das Kabel 10 ohne ein Überschreiten der maximal zulässigen Zugkraft in den Kabelkanal 14 eingeführt wurde. Sollte die maximal zulässige Zugkraft überschritten worden sein, so sind entsprechende Massnahmen zu ergreifen, wie zum Beispiel ein Ersetzen des eingezogenen Kabels 10.

Das Ermitteln des maximal aufgetretenen Zugkraftwertes Zmax kann in der Kabelzugkraftmessvorrichtung 2 erfolgen. In einer weiteren vorteilhaften Ausgestaltung werden die gespeicherten Zugkraftwerte Z1, Z2, ... Zn einer Auswertevorrichtung 12 übermittelt, welche zumindest den maximal aufgetretenen Zugkraftwert Zmax bestimmt, und welche vorzugsweise ein gesamtes Protokoll betreffend die währen dem Einziehen des Kabels 10 aufgetretenen Zugkraftwerte Z1, Z2, ... Zn erstellt.

Die Übermittlung der Zugkraftwerte Z1, Z2, .. Zn an die Auswertevorrichtung 12 kann derart erfolgen, dass die Kabelzugkraftmessvorrichtung 2 nach abgeschlossenem Kabeleinzug mit Hilfe eines Kabels an die Auswertevorrichtung 12 angeschlossen wird, um die Daten zu übertragen. In einer weiteren vorteilhaften Ausgestaltung kann, wie in Figur 1 dargestellt, die Übertragung der Daten auch drahtlos erfolgen, indem zumindest in der Kabelzugkraftmessvorrichtung 2 und der Auswertevorrichtung 12 Datenübertragungsvorrichtungen 18a, 18b vorgesehen sind. Vorteilhafterweise umfasst auch der Antrieb 13c eine Datenübertragungsvorrichtung 18c. Die Datenübertragung kann per Funk erfolgen. Es ist jedoch beispielsweise auch eine magnetische oder kapazitive Datenübertragung möglich.

Sofern eine drahtlose Datenübertragung verwendet wird können die gemessenen Zugkraftwerte Z1, Z2, .. Zn vorteilhafterweise unmittelbar nach erfolgter Messung an die Auswertevorrichtung 12 übermittelt werden. In einem vorteilhaften Verfahren überwacht die Auswertevorrichtung 12 die gemessenen Zugkraftwerte, und reduziert die vom Antrieb 13c auf das Zugseils 11 bewirkte Kraft, falls die Zugkraft Z einen vorgegebenen Zugkraftmaximalwert ZM übersteigt, indem die Auswertevorrichtung 12 den Antrieb 13c derart ansteuert, dass dieser die Zugkraft im Zugseil 11 reduziert.

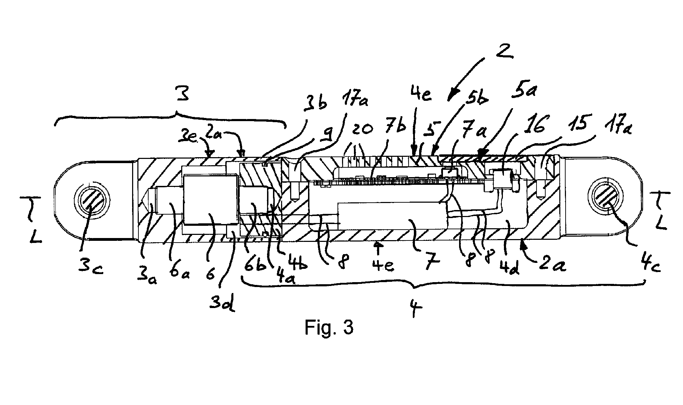

Figur 2 zeigt ein Ausführungsbeispiel einer Kabelzugkraftmessvorrichtung 2 in einer perspektivischen Ansicht, und Figur 3 zeigt dieselbe Kabelzugkraftmessvorrichtung 2 in einem Längsschnitt entlang der Längsachse L.

Die Kabelzugkraftmessvorrichtung 2 weist eine in Richtung der Längsachse L verlaufende Aussenoberfläche 2a auf. Im dargestellten Ausführungsbeispiel ist die Aussenoberfläche 2a zylinderförmig ausgestaltet. Der Querschnitt der Kabelzugkraftmessvorrichtung 2 ist somit kreisförmig. Die Kabelzugkraftmessvorrichtung 2 könnte jedoch auch eine andere Querschnittform aufweisen, und könnte beispielsweise auch quadratisch ausgestaltet sein. Die Kabelzugkraftmessvorrichtung 2 weist an den Stirnseiten vorne und hinten vorteilhafterweise abgerundete Ecken auf, damit während dem Einziehen der Kabelzugkraftmessvorrichtung 2 an der Stirnseite angreifende Gegenstände zur Seite gedrängt werden.

Die Kabelzugkraftmessvorrichtung 2 umfasst ein Stirnteil 3, einen Kraftsensor 6 sowie ein Zugteil 4, wobei das Stirnteil 3, der Kraftsensor 6 und das Zugteil 4 in Verlaufsrichtung der Längsachse L nacheinander folgend angeordnet sind, wobei das Stirnteil 3 über den Kraftsensor 6 mit dem Zugteil 4 verbunden ist, um mit dem Kraftsensor 6 die zwischen dem Stirnteil 3 und dem Zugteil 4 anliegende Kraft zu messen. Der Kraftsensor 6 ist über je ein Aussengewinde 6a, 6b mit einem Innengewinde 3a des Stirnteils 3 beziehungsweise mit einem Innengewinde 4a des Zugteils 4 verbunden. Der Kraftsensor 6 umfasst beispielsweise Dehnmessstreifen (DMS), könnte jedoch beispielsweise auch einen Piezoquarz umfassen.

Das Stirnteil 3 umfasst eine in Verlaufsrichtung der Längsachse L verlaufende Aussenoberfläche 3e beziehungsweise eine Aussenhülle 3e, und umfasst ein Befestigungsteil 3c für das Zugseil 11, und umfasst einen Innenraum 3d in welchem der Kraftsensor 6 angeordnet ist, und umfasst einen Abdeckabschnitt 3b. Das Zugteil 4 umfasst ebenfalls eine in Verlaufsrichtung der Längsachse L verlaufende Aussenoberfläche 4e beziehungsweise eine Aussenhülle 4e, und umfasst ein Befestigungsteil 4c für das Kabel 10, und umfasst eine Ausnehmung, welche einen Innenraum 4d begrenzt, in welchem eine Datenspeichervorrichtung 7, vorzugsweise ein Datenlogger, angeordnet ist. Ein lösbares Abdeckteil 5 begrenzt den Innenraum 4d, sodass der Innenraum 4d gegen Aussen vorzugsweise hermetisch dicht und insbesondere wasserdicht abgeschlossen ist. Das Abdeckteil 5 ist über zwei Schrauben 17, welche in je ein Gewinde 17a einführbar sind, lösbar mit dem Zugteil 4 verbunden. Das Zugteil 4 weist in einer vorteilhaften Ausgestaltung einen aussen zylinderförmigen Verbindungsabschnitt 4b auf, der einen leicht geringeren Durchmesser aufweist als der Innendurchmesser des Abdeckabschnittes 3b. Im Verbindungsabschnitt 4b ist eine Nut eingelassen, in welcher ein Dichtungsring 9 angeordnet ist. Diese Ausgestaltung ergibt den Vorteil, dass der Innenraum 3d des Stirnteils 3 hermetisch dicht und insbesondere wasserdicht abgeschlossen ist.

Der Kraftsensor 6 ist über Kabel 8 Signal leitend mit der Datenspeichervorrichtung 7 verbunden. Die am Kraftsensor 6 anliegende Zugkraft Z wird mehrmals zeitlich nacheinander, vorzugsweise in regelmässigen Zeitabständen, gemessen und die gemessenen Zugkraftwerte Z1, Z2, ... Zn in der Datenspeichervorrichtung 7 abgespeichert. Die Messung erfolgt beispielsweise einmal pro Sekunde. In einer möglichen Ausgestaltung sind im Innenraum 4d zudem ein Batterie sowie eine drahtlose Datenübertragungsvorrichtung 18a angeordnet, um die in der Datenspeichervorrichtung 7 gespeicherten Daten drahtlos an eine Auswertevorrichtung 12 zu übermitteln. In einer weiteren möglichen Ausgestaltung ist ein Stecker 16 vorgesehen, der über elektrische Leiter 8 mit der Datenspeichervorrichtung 7 verbunden ist, sodass die in der Datenspeichervorrichtung 7 gespeicherten Daten über ein am Stecker 16 anschliessbares Kabel an die Auswertevorrichtung 12 übertragbar sind. Bei diese Ausgestaltung ist vorteilhafterweise eine lösbare Abdeckplatte 15 vorgesehen, welche den Stecker 16 abdeckt, wobei die lösbare Abdeckplatte 15 vorzugsweise derart ausgestaltet ist, dass diese gegen Aussen der in Richtung der Längsachse L verlaufenden Aussenoberfläche 4e, 5b des Zugteils 4 beziehungsweise des Abdeckteils 5 angepasst ist, sodass eine einheitlich verlaufende, keine Vorsprünge aufweisende Aussenoberfläche entsteht. In einer weiteren vorteilhaften Ausgestaltung könnte ein Magnetsensor 7a vorgesehen sein, welcher unterhalb einer magnetischen Abdeckplatte 15 angeordnet ist. Es wäre somit möglich, dass das Befestigen der Abdeckplatte 15 am Abdeckteil 5 zur Folge hat, dass die Datenspeichervorrichtung 7 beziehungsweise die sich in der Kabelzugkraftmessvorrichtung 2 befindliche Elektronik über den Magentsensor 7a eingeschaltet wird, beziehungsweise dass durch ein Entfernen der Abdeckplatte 15 die Datenspeichervorrichtung 7 ausgeschaltet wird. Es ist zu berücksichtigen, dass die erfindungsgemässe Kabelzugkraftmessvorrichtung 2 vorzugsweise in einer sehr rauen Umgebung verwendet wird, zum Beispiel in Kabelkanälen, in Schächten, in Gräben oder auch unter Wasser. Dabei schleifen oft Gegenstände wie andere Kabel, Schachtwände oder auch Steine entlang der Oberfläche 2a der Kabelzugkraftmessvorrichtung 2. Für eine zuverlässige und störungsfreie Nutzung der Kabelzugkraftmessvorrichtung 2 ist es daher wichtig, dass diese hermetisch dicht ausgestaltet ist, und dass diese vorteilhafterweise eine Aussenoberfläche ohne Vertiefungen oder Vorsprünge aufweist. Die in den Figuren 2 und 3 dargestellte Abdeckplatte 15 erlaubt es den Stecker 16 zu schützen und eine Aussenoberfläche ohne Vertiefung oder Vorsprünge zu bilden. Eine Ausgestaltung mit Magnetsensor 7a und magnetischer Abdeckplatte 15 weist den Vorteil auf, dass zum Ein- und Ausschalten der Datenspeichervorrichtung 7 und der übrigen sich in der Kabelzugkraftmessvorrichtung 2 befindlichen Elektronik kein mechanischer Schalter erforderlich ist. Dies ermöglicht ein besonders zuverlässiges Ein- und Ausschalten.

Im Innenraum 4d des Zugteils 4 ist zudem eine Leiterplatte 7b angeordnet, über welche insbesondere ein Mehrzahl von vorzugsweise mehrfarbigen Leuchtdioden 20 angesteuert werden, die im Abdeckteil 5 in Längsrichtung L beabstandet angeordnet sind. Die Leuchtdioden 20 dienen als Anzeige von Betriebszuständen der Datenspeichervorrichtung 7 beziehungsweise der übrigen Elektronik der Kabelzugkraftmessvorrichtung 2.

In der bevorzugtesten Ausgestaltung der Kabelzugkraftmessvorrichtung 2 sind das Stirnteil 3 und das Zugteil 4 derart miteinander verbunden, dass keine gegenseitige Drehung um die Längsachse L möglich ist, beziehungsweise, dass das Stirnteil 3 und das Zugteil 4 bezüglich einer Drehung um die Längsachse L starr miteinander verbunden sind. In einer weiteren vorteilhaften Ausgestaltung sind das Stirnteil 3 und das Zugteil 4 gegenseitig um die Längsachse L drehbar gelagert, indem beispielsweise das zweite Befestigungsteil 6b des Kraftsensors 6 im die Längsachse L drehbar im Verbindungsabschnitt 4b gelagert ist. In einer weiteren möglichen Ausgestaltung ist im Stirnteil 3 oder im Zugteil 4 zudem ein sogenannter Drallfänger, auch Drehwirbel genannt, angeordnet. Ein derartiger Drallfänger hat die Eigenschaft, dass ohne Zuglast oder mit nur geringer Zuglast eine gegenseitige Drehung von Stirnteil 3 und Zugteil 4 um die Längsachse L möglich ist, wogegen der Drallfänger ab einer gewissen Zuglast blockiert, sodass keine gegenseitige Drehung von Stirnteil 3 und Zugteil 4 mehr möglich ist. Vorzugsweise umfasst ein derartiger Drallfänger ein Gleitlager, welches mit zunehmender Zugkraft schwerer dreht, um während dem Einzug des Kabels ein Aufdrehen des Zugseils zu verhindern. Der Drallfänger könnte in der in Figur 3 dargestellten Kabelzugkraftmessvorrichtung 2 beispielsweise im Endabschnitt des Stirnteils 3, zwischen dem Gewinde 3a, und dem Befestigungsteil 3c angeordnet sein. Der Drallfänger könnte in der in Figur 3 dargestellten Kabelzugkraftmessvorrichtung 2 beispielsweise auch Teil des Zugteils 4 bilden und beispielsweise im Verbindungsabschnitt 4b angeordnet sein. Dabei könnte der elektrische Leiter 8 beispielsweise Schleifkontate umfassen, um eine elektrische Verbindung zwischen der Datenspeichervorrichtung 7 und dem Kraftsensor 6 zu bilden.

In einer vorteilhaften Ausgestaltung wird die Datenspeichervorrichtung 7 derart betrieben, dass die Zugkraftwerte Z1, Z2, ... Zn und vorzugsweise auch die entsprechenden Messzeiten erst dann gespeichert werden, wenn die Zugkraftwerte einen vorgegebenen Zugkraftschwellenwert ZS übersteigen. Eine derartige Kabelzugkraftmessvorrichtung 2 kann während einer gewissen Zeit, zum Beispiel während eines ganzen Tages, als autarkes Messsystem betrieben werden, indem während des Tages eine Mehrzahl von Kabeln verlegt und eingezogen werden, und indem am Abend alle Daten aus der Datenspeichervorrichtung 7 ausgelesen werden. Da die Zugkraftwerte Z1, Z2, .. Zn und auch die den Zugkraftwerten zugehörigen Messzeitpunkte gespeichert sind, ist es leicht möglich für jedes eingezogene Kabel ein individuelles Protokoll der Zugkraftwerte in Funktion der Zeit zu erstellen, sodass für jedes eingezogene Kabel ein individuelles Protokoll vorliegt. Die erfindungsgemässe Kabelzugkraftmessvorrichtung 2 erlaubt daher ein besonders effizientes Einziehen von Kabeln 10, wobei für jedes eingezogene Kabel 10 ein individuelles Protokoll erstellt werden kann, z.B. bezüglich der maximal aufgetretenen Zugkraft, und/oder der Zugkraftwerte in Funktion der Zeit, und/oder der Zugkraftwerte in Funktion des Ortes in Kabelkanal.

In einer vorteilhaften Ausgestaltung ist in der Kabelzugkraftmessvorrichtung 2 zudem ein Beschleunigungssensor angeordnet, vorteilhafterweise ein dreidimensionaler Beschleunigungssensor, dessen Werte vorzugsweise synchron zu den gemessenen Zugkraftwerten Z1, Z2, ... Zn, in der Datenspeichervorrichtung 7 gespeichert werden. Die Auswertevorrichtung 12 kann mit Hilfe dieser Daten eine Geschwindigkeit und/oder einen Ort berechnen, und somit beispielsweise den gemessenen Zugkraftwerten Z1, Z2, ... Zn den jeweiligen Orten im Kabelkanal 14 zuordnen, sodass daraus zum Beispiel abgeleitet werden kann an welchen Stellen im Kabelkanal 14 besonders hohe Zugkräfte auftreten, was beispielsweise auf eine Engstelle oder ein Hindernis schliessen lässt. In einer weiteren vorteilhaften Ausgestaltung kann über die vom Beschleunigungssensor gemessenen Beschleunigungswerte die Länge des von der Kabelzugkraftmessvorrichtung zurückgelegten Weg bestimmt werden, indem während dem Einzug eines Kabels 10 die Beschleunigungswerte, ausgehend von der ersten Bewegung der Kabelzugkraftmessvorrichtung bis zum Stillstand der Kabelzugkraftmessvorrichtung gemessen und aufgezeichent werden. Aus diesen Beschleunigungswerten ist der von der Kabelzugkraftmessvorrichtung 2 relativ zurückgelegte Weg berechenbar oder zumindest ungefähr berechenbar. Der während dem Einziehen des Kabels zurückgelegte Weg der Kabelzugkraftmessvorrichtung 2 entspricht üblicherweise zudem der Länge des eingezogenen Kabels 10, sodass auch die Länge des eingezogenen Kabels 10 berechnet werden kann. Es kann sich zudem als vorteilhaft erweisen in der Kabelzugkraftmessvorrichtung 2 einen GPS-Empfänger einzubauen, damit der Kabelzugkraftmessvorrichtung 2 zumindest zeitweise genaue Positionsdaten zur Verfügung stehen. Auch diese Positionsdaten können beispielsweise synchron zu den gemessenen Zugkraftwerten Z1, Z2, ... Zn, in der Datenspeichervorrichtung 7 gespeichert werden.

Das Stirnteil 3 und das Zugteil 4 sind vorzugsweise aus einem korrosionsbeständigen Material gefertigt.

## Patentansprüche

1. Kabelzugkraftmessvorrichtung (2) aufweisend eine in Richtung einer Längsachse (L) verlaufende Aussenoberfläche (2a), sowie umfassend ein Stirnteil (3), einen Kraftsensor (6) sowie ein Zugteil (4), wobei das Stirnteil (3), der Kraftsensor (6) und das Zugteil (4) in Verlaufsrichtung der Längsachse (L) nacheinander folgend angeordnet sind, wobei das Stirnteil (3) über den Kraftsensor (6) mit dem Zugteil (4) verbunden ist, um mit dem Kraftsensor (6) die zwischen dem Stirnteil (3) und dem Zugteil (4) anliegende Kraft zu messen, sowie umfassend eine Datenspeichervorrichtung (7) welche im Stirnteil (3) oder im Zugteil (4) angeordnet ist, und welche mit dem Kraftsensor (6) Signal leitend verbunden ist, um die Zugkraft (Z) mehrmals zeitlich nacheinander zu messen und die gemessenen Zugkraftwerte (Z1, Z2, ... Zn) in der Datenspeichervorrichtung (7) abzuspeichern, wobei das Stirnteil (3) ein Befestigungsteil (3b) für ein Zugseil (11) aufweist und wobei das Zugteil (4) ein Befestigungsteil (4c) für ein Kabel (10) aufweist, wobei das Stirnteil (3) und das Zugteil (4) je eine Aussenhülle (3e,4e) aufweisen, wobei die Aussenhüllen (3e,4e) derart ausgestaltet sind, dass zumindest eine der Aussenhüllen (3e,4e) den Kraftsensor (6) gegen Aussen umhüllt, wobei die Aussenhüllen (3e,4e) gemeinsam die in Richtung der Längsachse (L) verlaufende Aussenoberfläche (2a) ausbilden.

2. Kabelzugkraftmessvorrichtung nach Anspruch 1, **dadurch gekennzeichnet, dass** das Stirnteil (3) und das Zugteil (4) einen gegen Aussen hermetisch dichten Innenraum (3d,4d) ausbilden, innerhalb welchen auch der Kraftsensor (6) und die Datenspeichervorrichtung (7) angeordnet sind.

3. Kabelzugkraftmessvorrichtung nach einem der vorhergehenden Ansprüche, **dadurch gekennzeichnet, dass** diese einen Drallfänger umfasst, durch welchen das Stirnteil (3) und das Zugteil (4) zuglastabhängig entweder gegenseitig um die Längsachse (L) drehbar gelagert sind, oder bezüglich einer Drehung um die Längsachse (L) starr miteinander gekoppelt sind.

4. Kabelzugkraftmessvorrichtung nach einem der vorhergehenden Ansprüche, **dadurch gekennzeichnet, dass** diese einen magnetisch aktivierbaren Schalter (7a) umfasst, um die Datenspeichervorrichtung (8) ein- oder auszuschalten, wobei insbesondere eine magnetische Platte (15) an der Aussenoberfläche (2a) befestigbar ist, um den magnetisch aktivierbaren Schalter (7a) einzuschalten.

5. Verfahren zum Einziehen eines Kabels (10) in einen Kanal (14), einen Graben oder einen Schacht, indem ein Zugseil (11) mit einer Kabelzugkraftmessvorrichtung (2) verbunden wird, wobei die Kabelzugkraftmessvorrichtung (2) ein Stirnteil (3) und ein Zugteil (4) aufweist, wobei das Stirnteil (3) mit dem Zugseil (11) verbunden wird, und wobei das Zugteil (11) mit dem einzuziehenden Kabel (10) verbunden wird, und wobei das Zugseil (11) und somit auch die Kabelzugkraftmessvorrichtung (2) und das einzuziehende Kabel (10) durch den Kanal (14), Graben oder Schacht gezogen werden, wobei während dem Einziehen des Kabels (10) die zwischen dem Stirnteil (3) und dem Zugteil (4) auftretende Zugkraft (Z) mit der Kabelzugkraftmessvorrichtung (2) mehrmals zeitlich nacheinander gemessen wird, und wobei die gemessenen Zugkraftwerte (Z1, Z2, ... Zn) in einer Datenspeichervorrichtung (7) der Kabelzugkraftmessvorrichtung (2) gespeichert werden.

6. Verfahren nach Anspruch 5, **dadurch gekennzeichnet, dass** zumindest die Zugkraft (Z) in regelmässigen Zeitabständen gemessen wird.

7. Verfahren nach Anspruch 5 oder 6, **dadurch gekennzeichnet, dass** die Zugkraftwerte (Z1, Z2, ... Zn) gespeichert werden sobald diese einen vorgegebenen Zugkraftschwellenwert (ZS) übersteigen.

8. Verfahren nach einem der Ansprüche 5 bis 7, **dadurch gekennzeichnet, dass** nach erfolgtem Einziehen des Kabels (10) die in der Datenspeichervorrichtung (7) der Kabelzugkraftmessvorrichtung (2) gespeicherten Zugkraftwerte (Z1, Z2, ... Zn) ausgelesen werden, und dass daraus zumindest der maximal gemessene Zugkraftwert (Zmax) ermittelt wird.

9. Verfahren nach einem der Ansprüche 5 bis 8, **dadurch gekennzeichnet, dass** in der Kabelzugkraftmessvorrichtung (2) zudem die Beschleunigung gemessen und gespeichert wird.

10. Verfahren nach einem der Ansprüche 5 bis 9, **dadurch gekennzeichnet, dass** die Zugkraft (Z) drahtlos einer Auswertevorrichtung (12) übermittelt wird.

11. Verfahren nach Anspruch 10, **dadurch gekennzeichnet, dass** die auf das Zugseil (11) wirkende Kraft reduziert wird, falls die Zugkraft (Z) einen vorgegebenen Zugkraftmaximalwert (ZM) übersteigt.

12. Vorrichtung (1) zum Einziehen eines Kabels (10) umfassend eine Kabelzugkraftmessvorrichtung (2) nach einem der Ansprüche 1 bis 4, sowie umfassend eine Kabelzugmaschine (13) mit einem Zugseil (11), sowie umfassend eine Auswertevorrichtung (12), wobei das Kabel (10) über die Kabelzugkraftmessvorrichtung (2) mit dem Zugseil (11) verbindbar ist, wobei die Kabelzugkraftmessvorrichtung (2) und die Auswertevorrichtung (12) derart ausgestaltet sind, dass die in der Datenspeichervorrichtung (7) der Kabelzugkraftmessvorrichtung (2) gespeicherten Zugkraftwerte (Z1, Z2, ... Zn) an die Auswertevorrichtung (12) übertragbar sind, und dass die Auswertevorrichtung (12) derart ausgestaltet ist, dass zumindest der maximal aufgetretene Zugkraftwert (Zmax) bestimmbar ist.

13. Vorrichtung nach Anspruch 12, **dadurch gekennzeichnet, dass** die Kabelzugkraftmessvorrichtung (2) sowie die Auswertevorrichtung (12) eine Datenübertragungsvorrichtung (18a. 18b) zur drahtlosen Datenübertragung aufweisen, um die gemessene Zugkraft (Z) oder die gespeicherten Zugkraftwerte (Z1, Z2, ... Zn) drahtlos von der Kabelzugkraftmessvorrichtung (2) zur Auswertevorrichtung (12) zu übermitteln.

14. Vorrichtung nach Anspruch 13, **dadurch gekennzeichnet, dass** die Auswertevorrichtung (12) eine Vergleichsvorrichtung (12a) umfasst, welche die gemessene Zugkraft (Z) mit einem vorgegebenen Zugkraftmaximalwert (ZM) vergleicht, wobei die Auswertevorrichtung (12) die Kabelzugmaschine (13) derart ansteuert, dass die von der Kabelzugmaschine (13) auf das Zugseil (11) bewirkte Kraft reduziert wird, falls die gemessen Zugkraft (Z) den vorgegebenen Zugkraftmaximalwert (ZM) übersteigt.

15. Verwendung einer Kabelzugkraftmessvorrichtung (2) nach einem der Ansprüche 1 bis 4, zum Einziehen eines Kabels (10) in einen Kanal (14), einen Graben oder einen Schacht, um die während dem Einziehen des Kabels (10) am Kabelanfang (10a) maximal aufgetretene Zugkraft (Zmax) zu ermitteln.
